# EUROPEAN PATENT APPLICATION

(11) **EP 1 363 059 A1**
(43) Date of publication of application: **19.11.2003**
(21) Application number: 03101348.5
(22) Date of filing: 14.05.2003
(51) Int. Cl.: F16L 11/08

(54) **Power steering hose**

(30) Priority: 17.05.2002 US 381233 P
(71) Applicant: THE GOODYEAR TIRE & RUBBER COMPANY, Akron, Ohio 44316-0001 (US)
(72) Inventor: Henry, Brian, Sun Prairie, WI 53590 (US); Tyson, Garth Alan, Madison, WI 53704 (US)
(74) Representative: Kutsch, Bernd

(57) **Abstract**

A hose for use in automotive power steering applications is disclosed. The hose has an inner tube (20), at least one reinforcing layer (8, 14), and a cover layer (12). The inner tube (20) is formed of at least an innermost rubber layer (2) and an adjacent thermoplastic layer (4). Preferably, the thermoplastic layer is formed of a material with a modulus three to ten times greater than the modulus of the innermost rubber layer (2).

## Description

### Field of the Invention

The disclosed invention relates to hoses, especially for use in automotive power steering applications.

### Background of the Invention

High performance hoses such as power steering hoses require high resistance to both chemical and temperature degradation. Currently, power steering hoses are made from a plurality of elastomeric layers and at least one reinforcing layer. The elastomeric materials are selected based on their ability to withstand temperatures of up to 300°F (about 150°C).

However, with known rubber reinforced power steering hoses, power steering assemblies are prone to two modes of failure. The first mode of failure is migration of rubber from underneath a coupling and the second mode is cracking of the tube due to age.

The present invention is directed to eliminating and reducing the failure modes for power steering hoses.

### Summary of the Invention

The present invention is a power steering hose. The hose has an inner tube, at least one reinforcing layer, and a cover layer. The inner tube is formed of at least an innermost rubber layer and an adjacent thermoplastic layer.

In another aspect of the invention, the hose has two reinforcing layers.

In another aspect of the invention, the hose has a rubber layer radially outward of the thermoplastic layer.

In another aspect of the invention, the thermoplastic layer is formed of nylon.

In another aspect of the invention, the thermoplastic layer is formed of a material with a modulus three to ten times greater than the modulus of the innermost rubber layer.

In another aspect of the invention, the thermoplastic layer has a thickness of 0.005 to 0.0015 inches (0.127 to 0.0381 mm).

### Brief Description of the Drawings

The invention will be described by way of example and with reference to the accompanying drawings in which:
FIG. 1 is a perspective view of a hose in accordance with the present invention; and
FIG. 2 is another embodiment of the invention.

### Detailed Description of the Invention

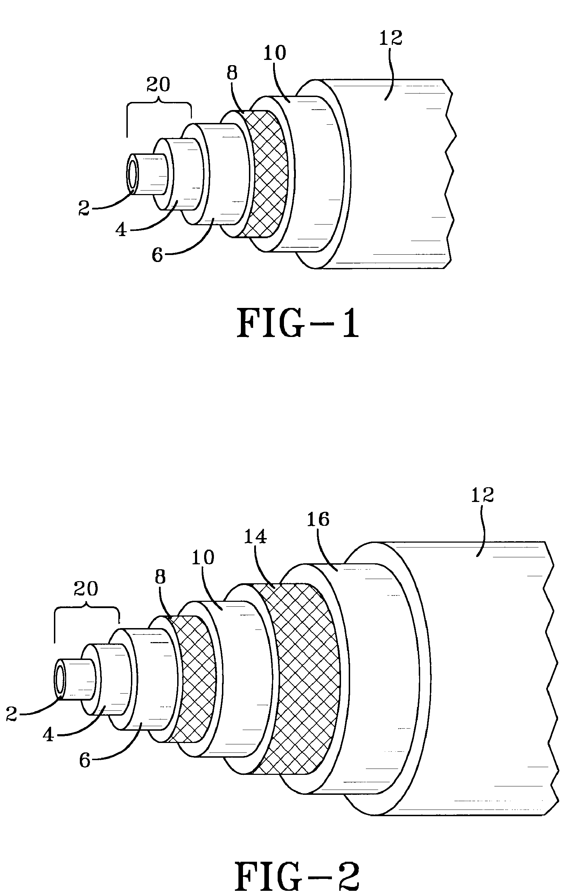

FIG. 1 illustrates a power steering hose construction in accordance with the present invention. The hose has a plurality of layers. At a minimum, the hose has an inner tube 20 formed of at least an innermost rubber layer 2 and a thermoplastic layer 4.

Radially outward of the inner tube 20 is a reinforcing layer 8. The reinforcing layer 8 may be sandwiched between a pair of adhesion layers 6, 10. Outward of the reinforcing layer 8 is a cover layer 12. The adhesion layers 6, 10 are compounded to promote adhesion between the reinforcing layer 8 and the thermoplastic layer 4 and the reinforcing layer 8 and the cover layer 12, respectively.

The innermost layer 2 is formed of a rubber compound such as nitrile-butadiene rubber (NBR), HNBR, chlorosulfonated polyethylene rubber (CSM), and CPE.

The thermoplastic layer 4 is formed of a high modulus plastic material. Materials which are suitable for use as the layer 4 are any thermoplastic material that has a modulus three to ten times the modulus of the rubber tuber 2, can be chemically bonded to the rubber layers immediately adjacent to it, and is heat resistance and resistant to power steering fluid. An acceptable thermoplastic material is nylon, but may be other materials.

The layer 4 has an optimum thickness to provide flexibility to the hose while preventing expansion of the hose under operating conditions. The thickness of layer 4 is preferably between 0.005 and 0.0015 inches (0.127 - 0.0381 mm).

The reinforcing layer 8 is formed of any known conventional fiber material used in forming hoses such as metallic fiber, polyester fiber, nylon fiber, aramid fiber, cotton fiber, or other synthetic or natural fiber, or a combination of any of these. The reinforcement layer is formed by braiding, spiraling, or knitting the fiber.

Suitable adhesion layers 6, 10 are formed of rubber materials such as chloroprene rubber (CR), NBR, ethylene propylene diene rubber (EPDM), CSM, or CPE.

In one exemplary hose, the hose is constructed as follows. The inner tube is constructed of an innermost HNBR layer and an outer layer of thin nylon. The nylon is covered by an EPDM layer for adhesion. The EPDM is covered by a single nylon braid reinforcing layer. The cover layer is CSM.

FIG. 2 illustrates a second embodiment of the power steering hose. Outward of adhesion layer 10 is a second reinforcing layer 14. Between the second reinforcing layer 14 and the cover layer 12 is another adhesion layer 16. The various adhesion layers, 6, 10, 16 are also known as tie layers.

The hose is manufactured in a single pass tubing process. The inner tube is formed initially by extruding a rubber layer onto a flexible mandrel. The thermoplastic layer is extruded onto the inner rubber layer, followed by an adhesion layer. At least one reinforcing layer is applied. The cover layer is extruded over the length of hose forming an indefinite length of uncured and unshaped hose length.

The hose length is then treated to form power steering hoses by any known method. Since power steering hoses are of the type known as short length curved hoses, typically, the hose length is cut into the required length and then inserted onto a curved mold. The cut hose length and mold are then placed into an autoclave and cured.

The presence of a thermoplastic layer in the power steering hose helps to keep the rubber from migrating due to coupling pressure and will prevent any inner tube cracks from propagating to the fabric layers of the hose.

## Claims

1. A power steering hose comprising an inner tube (20), at least one reinforcing layer (8) and a cover layer (12), the hose being **characterized by** the inner tube (20) having at least an innermost rubber layer (2) and an adjacent thermoplastic layer (4).

2. A power steering hose as set forth in claim 1 wherein the hose is further comprised of two reinforcing layers (8, 14).

3. A power steering hose as set forth in claim 1 wherein the hose is further comprised of at least one rubber layer (6, 10, 16) radially outward of the thermoplastic layer.

4. A power steering hose as set forth in claim 1 wherein the thermoplastic layer (4) is formed of nylon.

5. A power steering hose as set forth in claim 1 wherein the thermoplastic layer (4) is formed of a material with a modulus three to ten times greater than the modulus of the innermost rubber layer (2).

6. A power steering hose as set forth in claim 1 wherein the thermoplastic layer (4) has a thickness of 0.005 to 0.0015 inches (0.127 to 0.0381 mm).
